Europäisches Patentamt

**European Patent Office**

Office européen des brevets

(19)

(11) Numéro de publication: **0 210 894**
**B1**

(12) FASCICULE DE BREVET EUROPEEN

(45) Date de publication du fascicule du brevet: **02.01.91**

(51) Int. Cl.⁵: **F 16 D 23/14**

(21) Numéro de dépôt: **86401446.9**

(22) Date de dépôt: **30.06.86**

(54) **Montage de butée de débrayage et butée de débrayage propre à un tel montage.**

(30) Priorité: **15.07.85 FR 8510800**

(43) Date de publication de la demande:
**04.02.87 Bulletin 87/06**

(45) Mention de la délivrance du brevet:
**02.01.91 Bulletin 91/01**

(84) Etats contractants désignés:
**DE GB IT**

(56) Documents cités:
**EP-A-0 110 602**
**EP-A-0 153 087**
**FR-A-25 451 72**

(73) Titulaire: **VALEO**
**64 Avenue de la Grande Armée**
**F-75017 Paris (FR)**

(72) Inventeur: **Gay, Christian**
**36 rue Labat**
**F-75018 Paris (FR)**
Inventeur: **Lassiaz, Philippe**
**19 rue Thiers**
**F-92100 Boulogne (FR)**

(74) Mandataire: **Lemaire, Marc**
**Société VALEO Département Propriété**
**Industrielle 21, rue Blanqui**
**F-93406 Saint-Ouen (FR)**

Courier Press, Leamington Spa, England.

**Description**

La présente invention concerne d'une manière générale les butées de débrayage, notamment pour véhicules automobiles.

Elle vise plus particulièrement une butée de débrayage, dite tirée, du type agissant en traction sur un dispositif débrayeur d'un embrayage à commander, par exemple les extrémités des doigts d'un diaphragme, et qui pour ce faire, doit être attelée à celui-ci.

Il a été proposé à cet effet dans la demande de brevet français FR—A—2 545 172, un montage de butée de débrayage mettant en oeuvre entre la butée de débrayage et le dispositif débrayeur à commander une pièce, dite ici pièce d'accostage, et des moyens de solidarisation en traction qui, établis entre la pièce d'accostage et une pièce, dite ici par commodité pièce d'attaque, appartenant à la butée de débrayage, sont propres à assurer une liaison axiale entre lesdites pièces allant du dispositif débrayeur à ladite butée de débrayage.

Celle-ci comprend des moyens de solidarisation en traction qui comportent, d'une part, un organe de couplage élastiquement déformable radialement engagé, au moins partiellement, dans une gorge annulaire de retenue ménagée dans la pièce d'attaque et, d'autre part, une portée d'entraînement et des picots ménagés pour ledit organe de couplage dans la pièce d'accostage; lesdits picots étant à l'opposé de la portée d'entraînement par rapport audit organe de couplage.

Une telle disposition permet grâce aux picots un désaccouplement en aveugle, c'est-à-dire un désaccouplement sans intervention directe de l'opérateur sur les picots, de la butée de débrayage et de la pièce d'accostage sans déposer l'embrayage du plateau de réaction que comporte l'embrayage. Bien que donnant satisfaction cette réalisation nécessite de prendre des précautions pour limiter le mouvement d'engagement de la butée de débrayage au cours du montage afin que l'organe de couplage ne soit pas éjecté par les picots et c'est la raison pour laquelle on a prévu un moyen de limitation du mouvement sous forme par exemple de cales, ce qui entraîne un surcroît de manipulation de l'opérateur.

Il est également décrit dans la demande EP—A—0 153 087, telle que définie à l'article 54, paragraphe 3 de la CBE, un dispositif d'accouplement et de désaccouplement muni de moyens de solidarisation en traction comportant un organe de couplage déformable, grâce à des doigts pivotants, en saillie radiale à l'état libre et apte à rotuler sur un support en forme d'anneau rigide ce qui nécessite de créer des sièges d'articulation auxdits doigts.

La présente invention a pour objet de pallier cet inconvénient et donc de créer une disposition permettant un désaccouplement en aveugle de la butée de débrayage et de la pièce d'accostage sans nécessiter de limiter avec précision le mouvement d'engagement de la butée de débrayage au cours du montage et tout en procurant d'autres avantages.

L'invention propose à cet effet un montage de butée de débrayage, du genre comportant, pour l'attelage d'une butée de débrayage au dispositif débrayeur d'un embrayage, une pièce, dite ici pièce d'accostage, qui est convenablement rapportée sur ledit dispositif débrayeur, et des moyens de solidarisation en traction, qui, établis entre ladite pièce d'accostage et une pièce, dite ici pièce d'attaque, appartenant à la butée de débrayage, sont propres à assurer, dans une première position, une liaison axiale entre lesdites pièces, pièce d'accostage et pièce d'attaque, et de permettre, dans une deuxième position, le désaccouplement entre ces dites pièces, lesdits moyens de solidarisation en traction comportant, d'une part, un organe de couplage, ayant une partie pivotante, monté entre lesdites pièces en étant, au moins partiellement, engagé radialement dans une gorge ménagée pour lui sur la pièce d'attaque, en faisant saillie radialement vis-à-vis de ladite pièce d'attaque à l'état libre, et, d'autre part, une portée d'entraînement qui est ménagée globalement transversalement sur la pièce d'accostage et avec laquelle ledit organe de couplage coopère axialement en appui, dans le sens axial allant du dispositif débrayeur à ladite butée de débrayage, par des éléments, dits éléments de retenue, qu'il présente à cet effet, ladite pièce d'accostage présentant:

une portée de retournement située au raccordement d'une collerette en appui sur le dispositif débrayeur et d'une douille qui traverse ledit dispositif débrayeur,

une portée tronconique d'engagement de concavité tournée vers la butée de débrayage à l'extrémité de la douille opposée à la collerette,

une portée d'entraînement située entre les portées de retournement et d'engagement.

Selon une autre caractéristique de l'invention l'organe de couplage comprend une rondelle élastique apte à prendre par retournement deux configurations, la première pour laquelle elle est globalement convexe, pour le sens axial d'observation allant du dispositif débrayeur à ladite butée, après contact avec la portée d'engagement de la pièce d'accostage, l'autre pour laquelle elle est globalement concave, pour le même sens axial d'observation, après contact avec la portée de retournement de la pièce d'accostage.

Grâce à cette disposition, il suffit, au montage, d'engager la butée de débrayage dans l'ouverture centrale du dispositif débrayeur; au cours d'un tel engagement, les moyens de solidarisation s'effacent élastiquement sous l'action de la pièce d'accostage et prennent ensuite une configuration, entre les portées avec lesquelles ils doivent coopérer, nécessaire pour la solidarisation axiale entre la pièce d'accostage et la butée de débrayage.

Grâce à l'invention le montage de butée est réarmable, c'est-à-dire en cas d'une surcourse trop importante lors du montage, après dépassement de la portée de retournement, l'opérateur peut effectuer un mouvement en sens inverse et recommencer l'opération en aveugle.

On appréciera de plus que la pièce d'accostage puisse être simplifiée et être classique.

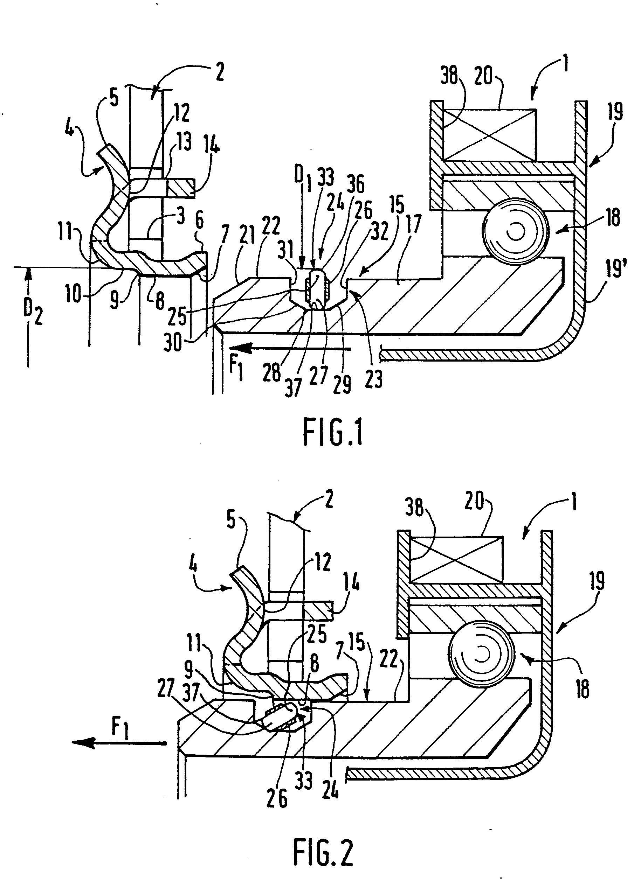

Les caractéristiques et avantages de l'invention es ressortiront de la description qui va suivre à titre d'exemple, en référence aux dessins annexés sur lesquels la figure 1 est une demi-vue en coupe axiale du montage de la butée lors de l'approche de la butée;

la figure 2 est une vue analogue à la figure 1 mais pour une des phases de l'engagement de la butée dans la pièce d'accostage;

la figure 3 est une vue analogue à la figure 1 pour la position montée;

la figure 4 est une vue analogue à la figure 1 après surcourse de la butée;

la figure 5 est une vue analogue de la figure 1 pour une des phases du désengagement de la butée;

la figure 6 est une vue de la rondelle élastique selon l'invention, avec notamment l'un de ses doigts de traction, détaché.

Dans le mode de réalisation représenté, il s'agit d'atteler une butée de débrayage 1 au dispositif débrayeur 2 d'un quelconque embrayage à commander.

Le dispositif débrayeur 2 est ici formé par les extrémités des doigts radiaux d'un diaphragme, qui, ainsi qu'on le sait, comporte une partie périphérique formant rondelle Belleville, pour serrage d'au moins un disque de friction entre deux plateaux, et une partie centrale fragmentée en doigts radiaux pour constitution d'un dispositif débrayeur.

De manière connue en soi, par exemple par la sus mentionnée demande française 2 545 172 pour l'attelage de, la butée de débrayage 1 au dispositif débrayeur 2, il est rapporté sur ce dernier, à la faveur de l'ouverture, centrale 3 que celui-ci possède, une pièce 4, dite ici pièce d'accostage.

Cette pièce 4 présente une collerette d'appui 5 pour action sur le dispositif débrayeur 2, et, d'un seul tenant avec celle-ci, une douille 6, qui, s'étendant globalement axialement, traverse le dispositif débrayeur 2 à la faveur de l'ouverture 3 de celui-ci.

Du côté de la butée de débrayage 1 la douille 6 forme par l'extrémité de sa surface interne une portée tronconique d'engagement 7, dont la concavité est tournée vers la butée de débrayage 1.

Une portée cylindrique de guidage 8 fait suite à cette portée d'engagement 7 et se raccorde à une portée d'entraînement profilée 9, dont la section est globalement en forme de quart de cercle. Cette portée d'entraînement 9 fait suite à une portée cylindrique l0 en étant disposée en bout de celle-ci.

En pratique, le diamètre D2 de la portée cylindrique 10 est supérieur au diamètre de la portée de guidage 8.

La portée 10 se raccorde à une portée 11, dite ciaprès portée de retournement, que présente la douille au niveau de son raccordement avec sa collerette 5. Comme visible à la figure 1 cette portée 11 est arrondie et résulte d'un pliage en constituant en quelque sorte un chanfrein d'engagement à concavité tournée à l'opposé de la butée de débrayage 1. En outre, comme décrit dans la demande de brevet français 2 544 036 déposée le 11 avril 1983, la collerette 5, convenablement conformée grâce à un bourrelet 12 pour appui sur le dispositif débrayeur 2, porte des pattes de retenue 13 qui chacune sont dotées de doigts de retenue 14 en vis-à-vis du bourrelet 12.

Une telle disposition par laquelle la pièce d'accostage 4 est convenablement rapportée sur le dispositif débrayeur 2 ne sera pas décrite plus en détail ici.

Il suffira de se rappeler que la mise en place de la pièce d'accostage 4 se fait par flexion axiale temporaire de l'extrémité des doigts du dispositif débrayeur 2, sur lesquels doivent agir les doigts de retenue 14, puis par rotation de la pièce d'accostage autour de l'axe de l'ensemble pour engagement circonférentiel des doigts de retenue 14 sur les doigts fléchis du dispositif débrayeur 2, et enfin par relâchement de ces derniers et ainsi attelage de la pièce d'accostage au dispositif débrayeur.

La butée de débrayage comporte, de manière connue en soi, un élément d'attaque 15 par lequel elle est destinée à agir sur la pièce d'accostage 2 de manière décrite ciaprès. L'élément d'attaque 15 est constitué ici par le prolongement 17 de la bague interne d'un roulement à billes 18, attelé axialement à un élément de manoeuvre représenté schématiquement en 19 sur lequel agissent les extrémités des doigts 20 d'une fourchette de débrayage. Cet élément de manoeuvre est lié à un manchon 19 pour coulissement, par exemple, sur une trompette de débrayage entourant l'arbre d'entrée de la boîte de vitesses. A son extrémité libre l'élément d'attaque 15 est doté d'un chanfrein d'entrée 21, de forme complémentaire à celui de la portée d'engagement 7, qui est prolongé par une portée de centrage 22, de diamètre légèrement inférieur à celui de la portée de guidage 8. C'est dans cette portée de centrage 22 qu'est pratiquée une gorge 23 pour réception d'un organe de couplage 24 élastiquement déformable, au moins partiellement engagé radialement dans ladite gorge 23.

Cet organe de couplage 24, avec la portée d'entraînement 9 fait partie des moyens de solidarisation en traction, de manière décrite ci-après, propres à assurer une liaison axiale allant du dispositif debrayeur 2 à ladite butée de débrayage 1; ledit organe de couplage 24 coopérant axialement en appui dans le sens considéré avec la portée d'entraînement 9 de la pièce d'accostage. Comme visible à la figure 1 l'organe de couplage 24 fait saillie radialement vis-à-vis de l'élément d'attaque 15 à l'état libre.

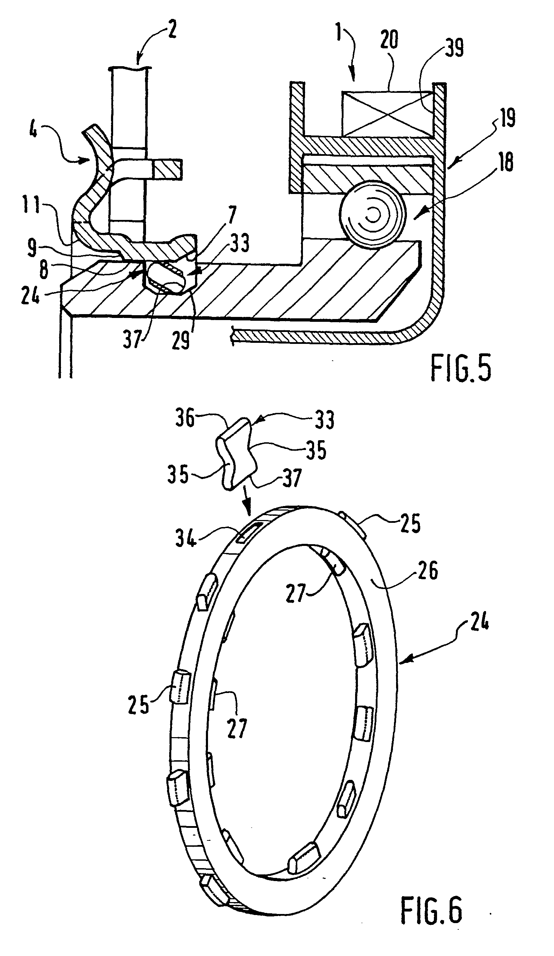

Suivant l'invention cet organe de couplage consiste en une rondelle élastique apte à prendre par retournement deux configurations, la première (figure 2) pour laquelle, pour le sens axial d'observation allant du dispositif débrayeur 2 à la butée de débrayage 1 (de gauche à droite sur les figures), après contact avec la portée d'engagement 7, elle est globalement convexe, l'autre (figure 5) pour laquelle, pour le même sens d'observation, elle est globalement concave après contact avec la portée de retournement 11, lesdites portées de retournement 11 et d'engagement 7 étant disposées de part et d'autre de la portée d'entraînement 9.

Cette rondelle élastique 24 présente au moins deux éléments de retenue 25 pour contact avec la portée d'entraînement 9.

En pratique ces éléments 25 font saillie radialement vers l'extérieur par rapport à l'âme 26 que comporte ladite rondelle 24. Cette rondelle 24 présente également au moins deux éléments de pivotement 27 pour coopération avec le fond de la gorge 23. Ici la gorge 23 est évasée et possède un fond plat 28 et deux parois latérales inclinées 29, 30, disposées de part et d'autre du fond 28 se raccordant chacune à une paroi respectivement 31 et 32 réalisant la jonction avec la portée de centrage 22.

Ici les éléments de pivotement 27 sont d'un seul tenant avec les éléments de retenue 25 en formant des doigts de traction 33 rigides et l'âme 26 est en matière élastomère. Comme mieux visible, cette âme est dotée d'évidements 34 pour logement des doigts de traction 33, par exemple métalliques, et constitue ainsi une cage pour ceux-ci. Plus précisément ces doigts métalliques 33 sont globalement des blocs de forme quadrangulaire et d'épaisseur constante, en étant évidés dans le sens de la longueur en 35. Ainsi ces doigts 33 ont globalement une forme de diabolo et sont ici engagés à force dans les évidements 34 de moindre largeur. On appréciera que les évidements latéraux 35 des doigts favorisent un bon maintien de ceux-ci avec l'âme 26. Ici les doigts 33 ont une hauteur supérieure à leur épaisseur.

En effet, lors de l'enfoncement des doigts 33 dans les évidements 34, l'élastomère de l'âme 26 remplit, par fluage, les évidements 34 et assure ainsi un blocage des doigts 33.

On notera que les tranches 36 et 37 de ces doigts sont arrondies, la tranche 36 étant propre à s'appuyer sur la portée d'entraînement 9 et la tranche 37 sur le fond de la gorge et que pour chaque doigt 33 le contact avec le fond de la gorge 23 se fait en un point et avec la portée d'entraînement en deux points.

Le montage est effectué de la manière suivante.

Dans la première phase, la rondelle 24, engagée dans la gorge 23, est en appui par sa tranche 37 contre le fond plat 28 de ladite gorge 23, en étant globalement plane dans un plan normal à l'axe. Lors du rapprochement suivant la flèche F1 de la figure 1, de la butée de débrayage 1, par rapport à la pièce d'accostage 4, en aveugle, par appui des doigts 20 de la fourchette contre la face 38 que comporte l'élément de manoeuvre 19, les doigts 33 rencontrent la portée d'engagement 7 de la pièce d'accostage, ce qui provoque un basculement de la rondelle 24, par pivotement des doigts 33 autour de leur tranche 37, son âme 26 travaillant en torsion entre deux doigts 33, puis au cours de la poursuite du mouvement un passage de ladite rondelle sous la portée de guidage 8 de la pièce d'accostage 4 centrée par la portée de centrage 22 de l'élément d'attaque 15 (figure 2).

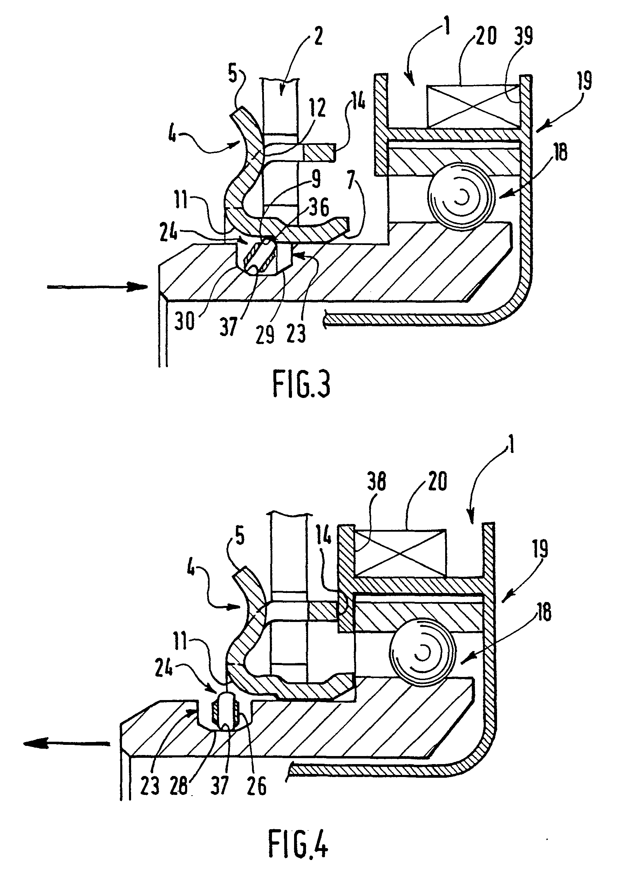

Le mouvement est poursuivi avec une surcourse audelà de la portée d'entraînement 9. Au cours de ces phases, la rondelle 24 est globalement convexe pour le sens d'observation allant du dispositif débrayeur 2 à la butée 1. Puis est effectué en sens inverse par appui des doigts 20 de la fourchette contre la plaque d'appui 39 de l'élément de manoeuvre 19. On arrive ainsi à la position de la figure 3 où les doigts de traction sont en appui par leur tranche 36 contre la portée d'entraînement 9 et par leur tranche 37 contre la face 30 inclinée de la gorge 23.

Un bon coincement et une bonne résistance à la traction sont ainsi obtenus.

On notera que, par simplicité on n'a pas tenu compte ici du mouvement axial de la pièce d'accostage 4 dû au jeu existant entre le bourrelet 12 de la collerette 5 et les doigts de retenue 14. Si l'on effectue une surcourse audelà de la portée de retournement 11 de la pièce d'accostage 4, la rondelle 24 reprend sous l'action de son âme élastique 26 sa position initiale plane. On notera que lorsque la butée vient en appui contre les doigts de retenue 14 de la pièce d'accostage 4, l'opérateur (figure 4), à cause d'une résistance plus élevée, sait qu'il doit arrêter son mouvement. Pour démonter l'ensemble, par exemple à partir de la position de la figure 4, il suffit d'effectuer une surcourse par appui des doigts 20 à la fourchette contre la face 38, puis à partir de la position de la figure 4, d'effectuer un mouvement en sens inverse, par appui des doigts 20 de la fourchette contre la face d'appui 39, ce qui entraîne un mouvement de retournement de la rondelle 24 au contact de la portée de retournement 11, celle-ci devenant globalement concave pour le sens d'observation allant du dispositif débrayeur 2 à la butée 1, et un passage de ladite rondelle sous les portées 9, 8, 7, la tranche 37 de chaque doigt 33 venant en appui contre la face 29 de la gorge (figure 5). Une libération de la pièce d'accostage 4 par rapport à la butée est ainsi réalisée.

Ainsi qu'on l'aura compris la forme de la gorge 23 facilite le basculement de la rondelle 24 et permet le logement de celle-ci, notamment dans les positions de celles des figures 2 et 5. En outre le nombre de blocs 33 (dix dans l'exemple représenté) dépend de l'effort de traction à transmettre.

De même, il ressort à l'évidence de la description que le diamètre D2 de la portée cylindrique 10 doit être inférieur au diamètre D1 externe de la rondelle 24 à l'état libre lorsqu'elle est engagée dans la gorge 23, c'est-à-dire au diamètre externe des doigts 33 en appui par leur tranche 37 contre le fond plat 28 de ladite gorge.

On appréciera que les portées de basculement 11 et d'engagement 7 ne risquent pas d'endommager l'âme en élastomère 26, qui facilite le montage de la rondelle 24 dans la gorge 23 par basculement et expansion radiale de celle-ci.

Bien entendu, la présente invention n'est pas limitée aux exemples de réalisations décrits.

En particulier les doigts 33 peuvent être surmoulés avec l'âme 26 ou "adhérisés" à celle-ci par vulcanisation in situ. Lorsque les efforts de traction ne sont pas très importants la rondelle peut être entièrement métallique.

De même, les blocs peuvent avoir des tranches 37, 36 épousant respectivement le profil de la gorge 23 et de la portée d'entraînement.

On notera que dans ce cas, contrairement au mode de réalisation représenté, le montage des doigts 33 ne peut se faire de manière indifférente. Enfin les flancs 29 et 30 de la gorge peuvent être arrondis.

## Revendications

1. Montage de butée de débrayage, du genre comportant, pour l'attelage d'une butée de débrayage (1) au dispositif débrayeur (2) d'un embrayage, une pièce, dite ici pièce d'accostage (4), qui est convenablement rapportée sur ledit dispositif débrayeur, et des moyens de solidarisation en traction, qui, établis entre ladite pièce d'accostage (4) et une pièce, dite ici pièce d'attaque (15), appartenant à la butée de débrayage, sont propres à assurer, dans une première position, une liaison axiale entre lesdites pièces, pièce d'accostage et pièce d'attaque, et de permettre, dans une deuxième position, le désaccouplement entre ces dites pièces, lesdits moyens de solidarisation en traction comportant, d'une part, un organe de couplage (24) ayant une partie pivotante, monté entre lesdites pièces en étant, au moins partiellement, engagé radialement dans une gorge (23) ménagée pour lui sur la pièce d'attaque, en faisant saillie radialement vis-à-vis de ladite pièce d'attaque à l'état libre, et, d'autre part, une portée d'entraînement (9) qui est ménagée globalement transversalement sur la pièce d'accostage et avec laquelle ledit organe de couplage coopère axialement en appui, dans le sens axial allant du dispositif débrayeur à ladite butée de débrayage, par des éléments, dits éléments de retenue, qu'il présente à cet effet, ladite pièce d'accostage (4) présentant:

une portée de retournement (11) située au raccordement d'une collerette (5) en appui sur le dispositif débrayeur (2) et d'une douille (6) qui traverse ledit dispositif débrayeur,

une portée tronconique d'engagement (7) de concavité tournée vers la butée de débrayage (1) à l'extrémité de la douille (6) opposée à la collerette (5),

une portée d'entraînement (9) située entre les portées de retournement (11) et d'engagement (7).

2. Montage de butée de débrayage selon la revendication 1, caractérisé en ce que l'organe de couplage (24) comprend une rondelle élastique apte à prendre par retournement deux configurations, la première pour laquelle elle est globalement convexe, pour le sens axial d'observation allant du dispositif débrayeur (2) à ladite butée (1),

après contact avec la portée d'engagement (7) de la pièce d'accostage (4), l'autre pour laquelle elle est globalement concave, pour le même sens axial d'observation, après contact avec la portée de retournement (11) de la pièce d'accostage (4).

3. Montage de butée de débrayage selon l'une des revendications 1 ou 2, caractérisé en ce que la portée de retournement (11) et la portée tronconique d'engagement (7) se prolongent vers l'intérieur de la douille (6) par des portées cylindriques (10, 8) de diamètres différents, la portée d'entraînement (9) assurant le raccordement de ces portées cylindriques.

4. Montage de butée de débrayage selon la revendication 2, caractérisé en ce que la rondelle élastique (24) présente une âme (26), avantageusement en matière élastomère.

5. Montage de butée de débrayage selon l'une des revendications 1, 2 ou 4, caractérisé en ce que les éléments de retenue (25) font saillie radialement vers l'extérieur par rapport à l'âme (26) de la rondelle élastique (24).

6. Montage de butée de débrayage selon l'une des revendications 2 à 5, caractérisé en ce que ladite rondelle élastique présente, en saillie radialement vers l'intérieur par rapport à son âme (26) au moins deux éléments de pivotement (27) pour coopération avec le fond de la gorge (23) de l'élément d'attaque (15).

7. Montage de butée de débrayage selon les revendications 1, 2, 5 et 6, caractérisé en ce que les éléments de pivotement (27) sont d'un seul tenant avec les éléments de retenue (25) et forment des doigts (33) dits doigts de traction.

8. Montage de butée de débrayage selon la revendication 7, caractérisé en ce que les doigts de traction (33) sont de forme quadrangulaire et leurs tranches de pivotement (37) et de retenue (36) sont arrondies.

9. Montage de butée de débrayage selon l'une des revendications précédentes, caractérisé en ce que la gorge (23) ménagée sur la pièce d'attaque (15) est évasée et présente un fond plat (28) et deux parois latérales inclinées (29, 30).

## Patentansprüche

1. Kupplungsausrücklageranordnung von der Art, die für die Ankopplung eines Kupplungsausrücklagers (1) an die Ausrückvorrichtung (2) einer Kupplung ein hier als Kopplungsstück (4) bezeichnetes Teil enthält, welches auf geeignete Weise an der genannten Ausrückvorrichtung angebaut ist, weiterhin Mittel zur Herstellung einer Zugverbindung, die, zwischen dem genannten Kopplungsstück (4) und einem Teil, welches hier als Antriebsstück (15) bezeichnet ist und zum Kupplungsausrücklager gehört, angeordnet und geeignet sind, in einer ersten Stellung eine axiale Verbindung zwischen den genannten Teilen, dem Kopplungsstück und dem Antriebsstück, zu gewährleisten und in einer zweiten Stellung das Entkuppeln der genannten Teile zu ermöglichen, wobei die genannten Zugverbindungsmittel einerseits ein Verbindungsorgan (24) mit einem drehbaren Teil aufweisen, welches zwischen den genannten Teilen angebracht ist und wenigstens teilweise radial in eine Rille (23) eingreift, die dafür am Antriebsstück vorgesehen ist und im freien Zustand im Verhältnis zum genannten Antriebsstück radial übersteht, und andererseits eine Antriebsfläche (9), die im wesentlichen in Querrichtung am Kopplungsstück angebracht ist und womit das genannte Verbindungsorgan axial aufliegend in der axialen Richtung zusammenwirkt, die von der Ausrückvorrichtung zum genannten Kupplungsausrücklager verläuft, und zwar mit Hilfe der sogenannten Halteelemente, die daran zu diesem Zweck vorgesehen sind, wobei das genannte Kopplungsstück (4) folgendes aufweist:

eine Rücklauffläche (11), die an der Verbindungsstelle eines auf der Ausrückvorrichtung (2) aufliegenden Kragens (5) und einer Hülse (6) liegt, welche quer durch die genannte Ausrückvorrichtung hindurch verläuft,

eine kegelstumpfförmige Eingriffsfläche (7), deren konkave Seite dem Kupplungsausrücklager (1) an dem dem Kragen (5) gegenüberliegenden Ende der Hülse (6) zugewandt ist,

eine Antriebsfläche (9), die zwischen der Rücklauffläche (11) und der Eingriffsfläche (7) angeordnet ist.

2. Kupplungsausrücklageranordnung nach Anspruch 1, dadurch gekennzeichnet daß, das Verbindungsorgan (24) eine Federscheibe enthält, die geeignet ist, durch Rückfederung zwei Konfigurationen einzunehmen, und zwar eine erste, im wesentlichen konvexe Konfiguration, betrachtet in Längsrichtung von der Ausrückvorrichtung (2) zum genannten Ausrücklager (1) nach Kontakt mit der Eingriffsfläche (7) des Kopplungsstücks (4), und eine weitere Konfiguration, bei der sie, in der gleichen Längsrichtung betrachtet, nach Kontakt mit der Rücklauffläche (11) des Kopplungsstücks (4) im wesentlichen eine konkave Form hat.

3. Kupplungsausrücklager nach einem der Ansprüche 1 oder 2, dadurch gekennzeichnet, daß sich die Rücklauffläche (11) und die kegelstumpfförmige Eingriffsfläche (7) in das Innere der Hülse (6) durch zylindrische Flächen (10, 8) mit unterschiedlichem Durchmesser fortsetzen, wobei die Antriebsfläche (9) die Verbindung zwischen diesen zylindrischen Flächen gewährleistet.

4. Kupplungsausrücklager nach Anspruch 2, dadurch gekennzeichnet, daß die Federscheibe (24) einen vorteilhafterweise aus Elastomermaterial bestehenden Kern (26) aufweist.

5. Kupplungsausrücklager nach einem der Ansprüche 1, 2 oder 4, dadurch gekennzeichnet, daß die Halteelemente (25) im Verhältnis zum Kern (26) der Federscheibe (24) radial nach außen vorspringen.

6. Kupplungsausrücklager nach einem der Ansprüche 2 bis 5, dadurch gekennzeichnet, daß die genannte Federscheibe, im Verhältnis zum Kern (26) radial nach innen vorspringend, wenigstens zwei Drehelemente (27) aufweist, die mit dem Boden der Rille (23) des Treibelements (15) zusammenwirken.

7. Kupplungsausrücklageranordnung nach den Ansprüchen 1, 2, 5 und 6, dadurch gekennzeichnet, daß die Drehelemente (27) aus einem Stück mit den Halteelementen (25) bestehen und sogenannte Zugfinger (33) bilden.

8. Kupplungsausrücklager nach Anspruch 7, dadurch gekennzeichnet, daß die Zugfinger (33) von viereckiger Form sind und daß ihre Drehkanten (37) und Haltekanten (36) abgerundet sind.

9. Kupplungsausrücklager nach einem der vorherigen Ansprüche, dadurch gekennzeichnet, daß die am Antriebsstück (15) vorgesehene Rille (23) konisch erweitert ist und einen flachen Boden (28) sowie zwei schräge Seitenwände (29, 30) aufweist.

## Claims

1. A mounting for a clutch release bearing, of the kind comprising, for the attachment of a clutch release bearing (1) to the declutching means (2) of a clutch, a member here referred to as a coupling member, which is suitably carried on the said declutching means, together with tractive connecting means which, being arranged between the said coupling member (4) and a member which is part of the clutch release bearing and which is referred to here as an actuating member, are adapted for producing, in a first position an axial coupling between the said members, namely the coupling member and the actuating member, and for allowing uncoupling to take place between these said members in a second position, the said tractive connecting means including, firstly a coupler member (24) having a pivoting portion and being mounted between the said members so as to be at least partially engaged radially in a groove (23), which is formed for it in the actuating member, but so as to project radially from the said actuating member in the free state, and secondly a drive surface (9) which is formed generally transversely on the coupling member (4) and with which the said coupler member (24) cooperates axially, in engagement therewith in the axial direction going from the declutching means towards the said clutch release bearing, by means of elements referred to as retaining elements, with which it is provided for this purpose, wherein the said coupling member (4) includes

an upturned surface (11) which is joined to a collar portion (5) that bears on the declutching means (2), the upturned surface being further joined to a sleeve portion (6) which extends through the said declutching means,

a frusto-conical engagement surface (7) which is concave towards the clutch release bearing (1) and disposed at the end of the sleeve portion (6) which is remote from the collar portion (5), and

a drive surface (9) which is situated between the upturned surface (11) and the engagement surface (7).

2. A mounting for a clutch release bearing according to Claim 1, characterised in that the coupler member (24) comprises a resilient ring which is adapted to assume, by inversion, two configurations, in the first of which it is generally convex in the axial direction of observation going from the declutching means (2) towards the said bearing (1), after contact with the engagement surface (7) of the coupling member (4), and in the other of which configurations it is generally concave in the same axial direction of observation, after contact with the upturned surface (11) of the coupling member (4).

3. A mounting for a clutch release bearing according to one of Claims 1 and 2, characterised in that the upturned surface (11) and the frusto-conical engagement surface (7) are extended towards the interior of the sleeve portion (6) by cylindrical surfaces (10, 8) having different diameters with the drive surface (9) joining these cylindrical surfaces together.

4. A mounting for a clutch release bearing according to Claim 2, characterised in that the resilient ring (24) comprises a core (26) which is preferably of elastomeric material.

5. A mounting for a clutch release bearing according to one of Claims 1, 2 and 4, characterised in that the retaining elements (25) project radially outwardly with respect to the core (26) of the resilient ring (24).

6. A mounting for a clutch release bearing according to one of Claims 2 to 5, characterised in that the said resilient ring has projecting radially inwardly with respect to its core (26), at least two pivot elements (27) for cooperation with the base of the groove (23) in the actuating member (15).

7. A mounting for a clutch release bearing according to Claims 1, 2, 5 and 6, characterised in that the pivot elements (27) are integral with the retaining elements (25) and constitute fingers (33) referred to as traction fingers.

8. A mounting for a clutch release bearing according to Claim 7, characterised in that the traction fingers (33) are quadrilateral in shape, and their pivot portions (37) and retaining portions (36) are rounded.

9. A mounting for a clutch release bearing according to one of the preceding Claims, characterised in that the groove (23) which is formed on the actuating member (15) is flared and has a flat base (28) and two inclined side walls (29, 30).

FIG.1

FIG.2

1

FIG.3

FIG.4

EP 0 210 894 B1

FIG.5

FIG.6